# EUROPÄISCHE PATENTSCHRIFT

(11) **EP 0 718 221 B1**
(45) Veröffentlichungstag und Bekanntmachung des Hinweises auf die Patenterteilung: **22.07.1998**
(21) Anmeldenummer: 95250265.6
(22) Anmeldetag: 31.10.1995
(51) Int. Cl.: B65G 47/38

(54) **Sortierförderer mit einer kippbaren Tragschale**
Sorting-conveyor with a rocking tray
Transporteur de triage avec un plateau basculant

(30) Priorität: 23.12.1994 DE 4447396
(43) Veröffentlichungstag der Anmeldung: 26.06.1996
(73) Patentinhaber: MANNESMANN Aktiengesellschaft, 40213 Düsseldorf (DE)
(72) Erfinder: Baum, Ingolf, Dipl.-Ing., D-63128 Dietzenbach (DE); Droste, Heinrich, Dipl.-Ing., D-64832 Babenhausen (DE); Humburg, Holger, Dipl.-Ing., D-63454 Hanau (DE)
(74) Vertreter: Presting, Hans-Joachim, Dipl.-Ing.

(56) Entgegenhaltungen:
- EP-A- 0 173 399
- EP-A- 0 664 262
- WO-A-90/09944
- AT-A- 313 793
- FR-A- 2 528 403
- US-A- 3 589 501

## Beschreibung

Die Erfindung betrifft einen Sortierförderer mit einer kippbaren Tragschale, gemäß dem Oberbegriff des Patentanspruchs 1.

Aus der Veröffentlichung DE 40 90 308 T1 ist bereits ein ähnlicher Sortierförderer bekannt. Hier wird ein Kippen dadurch ermöglicht, daß eine ausgewählte Nockenstößelrolle zunächst nach außen und dann nach unten gezogen wird. Beim Ziehen nach außen bewegen sich die Rollen, begleitet von einer entsprechenden Schwenkbewegung eines Arms, in den Führungs-Abschnitten nach außen in die Nähe des oberen Endes der unteren Abschnitte, so daß sie danach, wenn sie entlang den Abschnitten geführt werden, dem Arm eine Abwärtsbewegung ermöglichen, durch die der Kippkörper und seine Tragschale gekippt werden. Während dieses Kippens bewegen sich andere Rollen am gegenüberliegenden Arm entlang von oberen Spuren nach oben. Dabei bleibt dieser Arm in einer weitgehend unveränderten Winkellage nach innen gehalten, und es wird so gewährleistet, daß die Rollen beim anschließenden Zurückkippen in die Ausgangslage zurückkehren. Obgleich die Rollen in einer senkrechten Ebene zur Fahrtrichtung in entsprechenden Kurvenführungen gleiten, besteht doch ein hoher Widerstand für die Rollen, nach außen gezogen zu werden. Diesem Nachaußenziehen steht gegenüberliegend ein Nachinnenziehen der analogen Rolle am gegenüberliegenden Arm entgegen. Die Reibungswiderstände sind daher entsprechend groß und Rollen und Arme sind entsprechend hoch beansprucht. Diese bekannte Lösung kann daher allenfalls für kleinere Fördergutstücke eingesetzt werden, deren Gewicht einige Kilogramm nicht übersteigt.

Desweiteren ist aus der französischen Offenlegungschrift FR 2528403 A1 ein Sortierförderer mit einzelnen antreibbaren Wagen bekannt, auf denen eine um eine in Fahrtrichtung verlaufende Kippachse schwenkbare Tragschale angeordnet ist. Die Tragschale weist hier an ihrer Unterseite zwei in Fahrtrichung voneinander beabstandete und sich nach unten erstreckende Pendel auf, die in ihrem mittleren Bereich an den Kippachsen gelagert sind. An dem freien Pendelende greift ein Kippmechanismus an, der im wesentlichen aus einem Doppelhebel gebildet ist, der um eine parallel zur Kippachse verlaufende erste Achse und eine quer zur Fahrtrichtung verlaufende zweite Achse schwenkbar an dem Wagen gelagert ist. Das erste Ende des Doppelhebels ist gelenkig mit dem freien Pendelende verbunden und das zweite Pendelende trägt um im wesentlichen horizontal verlaufende Achsen drehbare Rollen. Die Rollen werden für den Kippvorgang der Tragschale durch entlang der Fahrschienen angeordnete ortsfeste Kurvenschienen, deren Verlauf in Vertikalrichtung ansteigend ist, angehoben, so daß zunächst der Doppelhebel um die zweite Achse für eine Entriegelung der Tragschale und anschließend um die erste Achse zum Kippen der Tragschale verschwenkt wird.

Der Erfindung liegt die Aufgabe zugrunde, eine leicht, schnell und ohne größere Beanspruchungen schaltende Vorrichtung zu schaffen, die wenig aufwendig ist.

Diese Aufgabe wird durch einen Sortierförderer mit den im Anspruch 1 angegebenen Merkmalen gelöst.

Vorteilhafterweise kann mit dem Schieber sowohl die Kippfunktion als auch die Arretierfunktion ausgeführt werden. Weiterhin ist vorteilhaft, über den Kurvenverlauf der ortsfesten Weichenstücke den Kippverlauf bezüglich Beschleunigung und Verzögerung abhängig vom jeweiligen Fördergut einzustellen. Von Vorteil ist außerdem, daß derartige Kurvenverläufe in kurzen Abständen hintereinander angeordnet werden können, so daß kurze Wagen mit entsprechend kurzen Tragschalen geschaffen werden können.

In Ausbildung der Erfindung ist vorgesehen, daß das Pendelgelenk mittels einer an dem Pendelende und an dem Schieber angelenkten Schwinge gebildet ist. Damit wird die Kreisbogenbewegung des Pendels aufgefangen.

Es kann jedoch nach weiteren Merkmalen auf die Schwinge dadurch verzichtet werden, indem das Gelenk aus einer in einem Bereich des Pendelendes angeordneten Langlochführung und einer am Schieber drehgelagerten Rolle, die in die Langlochführung eingreift, gebildet ist.

Kippbewegung und Arretierfunktion sind dahingehend gestaltet, daß in Fahrtrichtung gesehen, Linksabwurf des Fördergutes über eine ortsfeste rechte Kurvenschiene und Rechtsabwurf über eine ortsfeste linke Kurvenschiene erfolgen.

Außerdem wird vorgeschlagen, daß die Tragschale zumindest in Mittelstellung arretierbar ist.

Eine schnelle Einleitung des Kippvorganges wird darüber hinaus dadurch erzielt, daß die linken und rechten Weichenstücke jeweils einen anfänglich geraden und nachfolgend einen nach außen verlaufenden Kurvenabschnitt aufweisen.

Eine Weiterentwicklung der Erfindung sieht vor, daß der Schieber auf einem um eine quer zur Fahrtrichtung verlaufenden Kippergelenk schwenkbaren Grundkörper angeordnet und zwischen paarweisen Rollen- und/oder Gleitführungen gelagert ist.

Hierbei ist vorteilhaft, um die Reibung zu vermindern, daß die Rollenführungen aus Wälzlagerringen gebildet sind.

Eine sichere Führung während des Kippvorganges wird dadurch erzielt, daß die Schaltkufen mit den Schaltrollen in eine zumindest einseitig in einem Nutenprofil hinterschnittene Kurvennut der Weichenstücke einführbar sind. Dadurch wird die Schaltrolle zwangsweise innerhalb der Kurvennut gehalten, so daß ein Herausrutschen o.ä. nicht erfolgen kann.

Vorteilhafterweise sind ferner Arretiermittel an dem Schieber angeordnet, die mit dem Grundkörper zusammenwirken.

Nach weiteren Merkmalen der Erfindung wird vorgeschlagen, daß die Schaltkufen jeweils auf einer drehbaren Schaltwelle befestigt sind, die an einem Ende eine Arretiernocke trägt, die bei Eingriff einer der Schaltrollen in die Kurvennut die Tragschale gegenüber dem Grundkörper arretiert.

Vorteilhaft ist außerdem, daß die Schaltkufe für hohe Schaltgeschwindigkeiten mittels eines Puffers gedämpft ist. Ein solcher Puffer kann aus entsprechenden Polyamid-Kunststoffen bestehen, und eine Dämpfung kann schon aufgrund einer Biegebewegung solcher Kunststoffe erzielt werden.

In einem speziellen Ausführungsbeispiel hat sich bewährt, daß zwei Arretiernocken mit vier Anschlagflächen am Grundkörper zusammenwirken. Die beiden Arretiernocken befinden sich jeweils mit zwei vorstehenden bzw. zwei zurückspringenden Anschlagflächen in Kontakt.

Schließlich wird vorgeschlagen, daß die Schaltkufen mittels der in den Fahrweg einschiebbaren Schaltelemente betätigbar, d.h. um die Schaltwellenachse schwenkbar sind. Hierbei können die Schaltkufen in einem hohe Geschwindigkeit berücksichtigenden Kurvenprofil ausgeführt sein, um die Einleitung des Schaltvorganges relativ schnell aber sanft durchführen zu können.

In der Zeichnung sind Ausführungsbeispiele der Erfindung dargestellt und werden im folgenden näher beschrieben. Es zeigen
- Fig. 1: die Seitenansicht eines Sortierförderers, der auf einer Vielzahl von Wagen angeordnet ist, wobei die Wagen mittels Kettengliedern miteinander verbunden sind und sich auf einer Kreisbahn bewegen
- Fig. 2: eine vergrößerte Seitenansicht eines solchen Wagens,
- Fig. 3: eine Vorderansicht des Wagens mit Tragschale und Kippvorrichtung in Form des Schiebers,

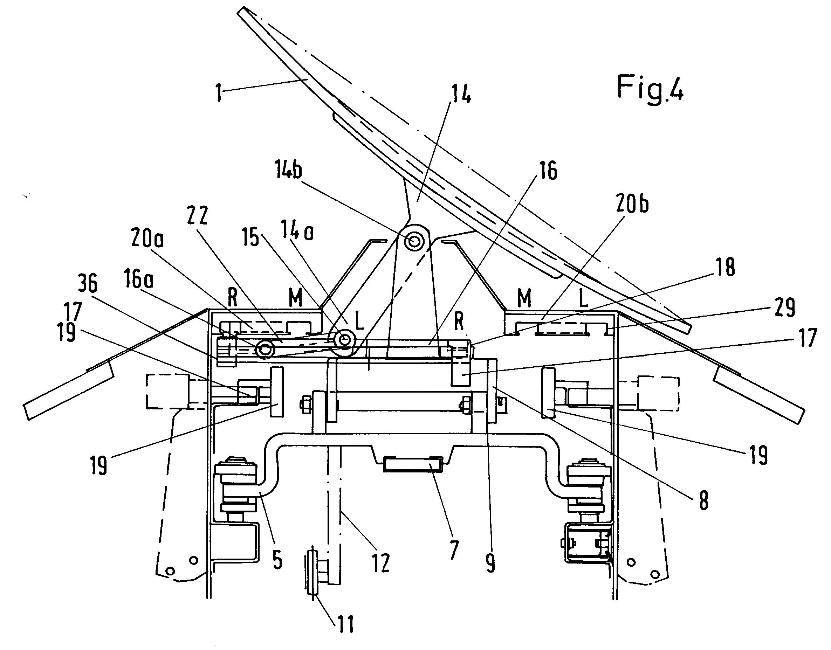

- Fig. 4: dieselbe Vorderansicht wie Fig. 3 in einer gekippten Lage der Tragschale,
- Fig. 5: eine Draufsicht auf den Wagen mit Tragschale, wobei ein Ausschnitt die Sicht auf den Schieber freigibt und
- Fig. 6: die Vorderansicht entsprechend den Figuren 2 bis 4 mit einer alternativen Ausführungsform des Gelenks an dem Pendel.

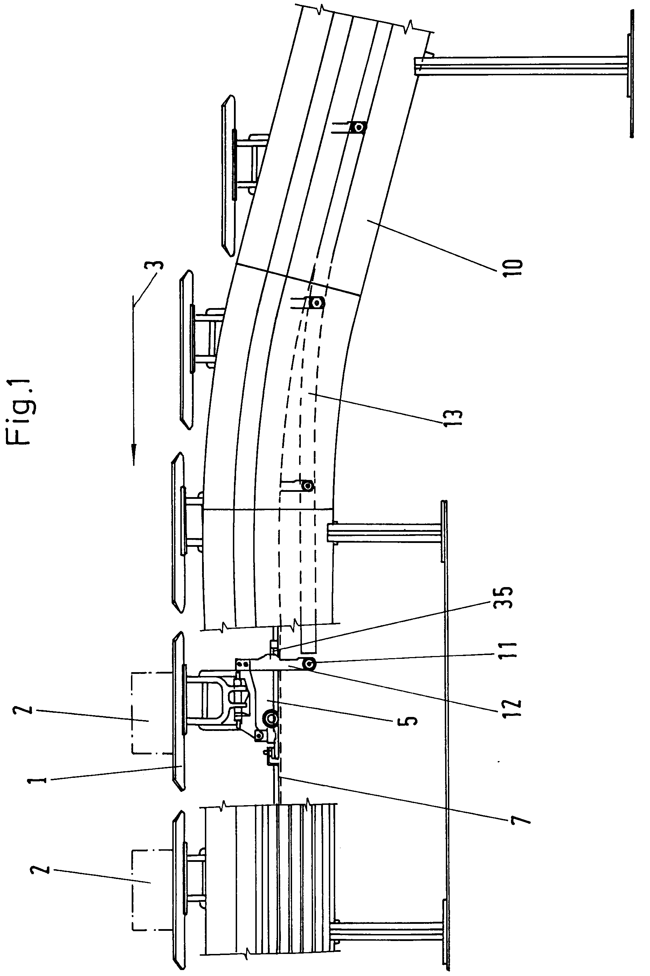

Der in der Zeichnung dargestellte Sortierförderer besitzt jeweils eine kippbare Tragschale 1, die für die Abgabe von an einer Aufnahmestation aufgegebenem Fördergut 2 (Fig. 1) aus einer horizontalen Transportstellung durch eine Kippbewegung um eine in Fahrtrichtung 3 verlaufende Kippachse 4 mittels einer auf einem antreibbaren Wagen 5 angeordneten Kippvorrichtung schwenkbar ist, wobei über ortsfeste Kurvenschienen 6 das Schwenken der jeweiligen Tragschale 1 und ein Arretiervorgang einleitbar sind.

Ein Kettenglied 7 bewegt sich mit einem über ein Kippergelenk 9 befestigten Grundkörper 8 in einer Förderbahn 10. Dabei können Steigungen bzw. Gefällestrecken überwunden werden, wobei die Tragschale 1 horizontal bleibt. Diese Wirkung wird dadurch erreicht, daß der Grundkörper 8 mittels eines Steigers 12 und einer daran befestigten Steigerrolle 11, die sich in Steigungen und Gefällestrecken im Eingriff mit einer Vertikalführung 13 befindet, um das Kippergelenk 9 jeweils in horizontaler Lage zu halten.

Die Tragschale 1 ist an einem um die wagenfeste Kippachse 4 schwenkbaren Pendel 14 befestigt. Das freie Pendelende 14a ist mittels eines Gelenkes 15 an einem quer zur Fahrtrichtung 3 in dem Grundkörper 8 geführten Schieber 16 angelenkt, wobei an dem Schieber 16 in Fahrtrichtung 3 links und rechts drehbar gelagerte Schaltkufen 17 mit Schaltrollen 18 vorgesehen sind, die während der Fahrt und nach Betätigung durch ortsfeste Schaltelemente 19 in ortsfeste Weichenstücke 20a,20b eingreifen, die die Kurvenschienen 6 bilden, mittels deren Kurvenverlauf 21 die Kippbewegung der Tragschale 1 steuerbar ist.

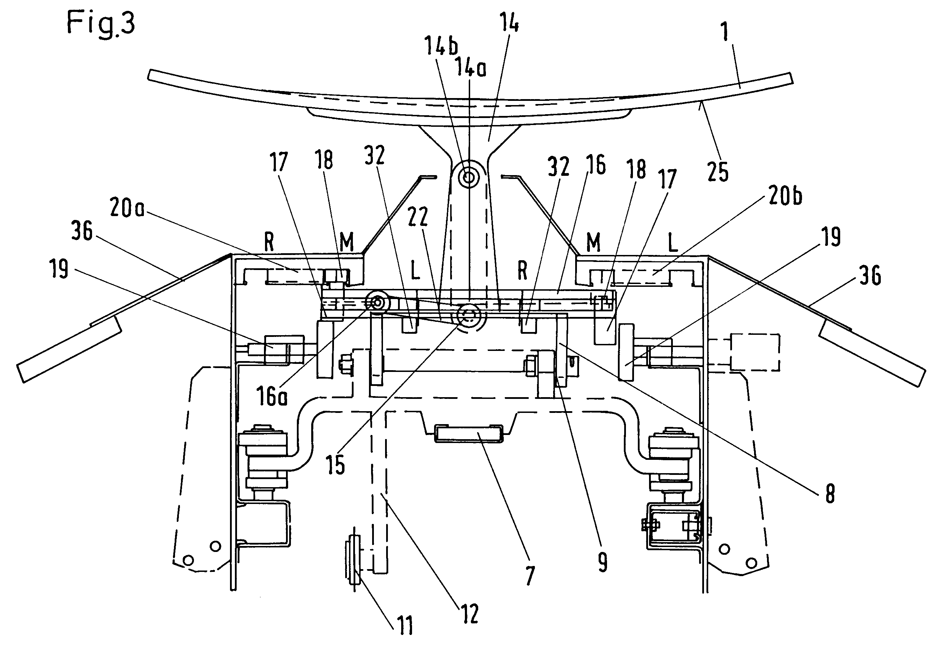

Das Pendelgelenk 15 ist gemäß Fig. 3 mittels einer an dem Pendelende 14a und an dem Schieber 16 angelenkten Schwinge 22 gebildet.

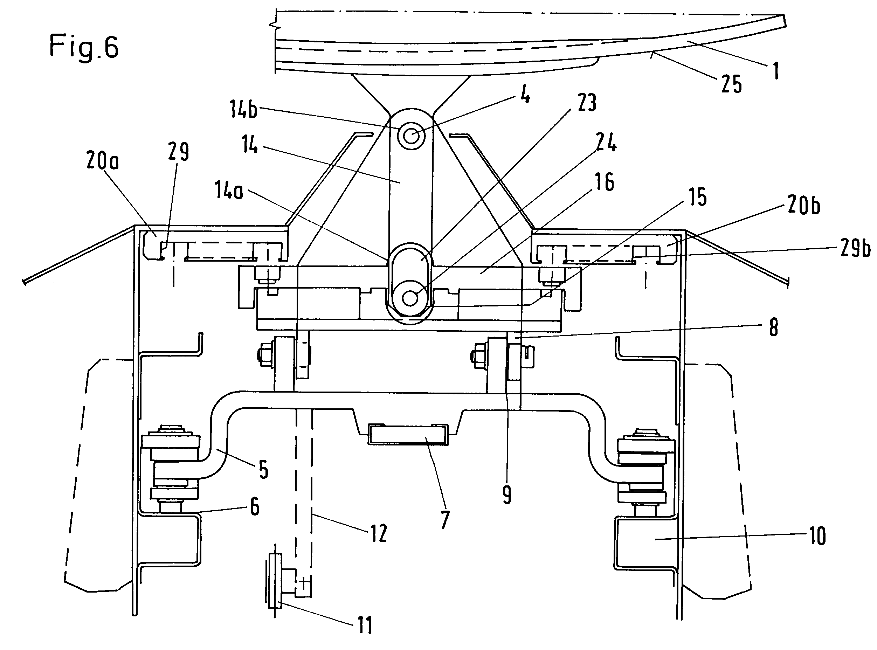

Nach einer alternativen Ausführungsform (Fig. 6) ist das Gelenk 15 aus einer in einem Bereich des Pendelendes 14a angeordneten Langlochführung 23 und einer am Schieber 16 drehgelagerten Rolle 24, die in die Langlochführung 23 eingreift, gebildet.

Das Pendel 14 ist um eine Pendelachse 14b, die im Grundkörper 8 gelagert ist, schwenkbar. Es bildet sodann entweder mit der Schwinge 22 oder über die Rolle 24 und die Langlochführung 23 das Pendelgelenk 15 bzw. ein Schiebergelenk 16a am Schieber 16.

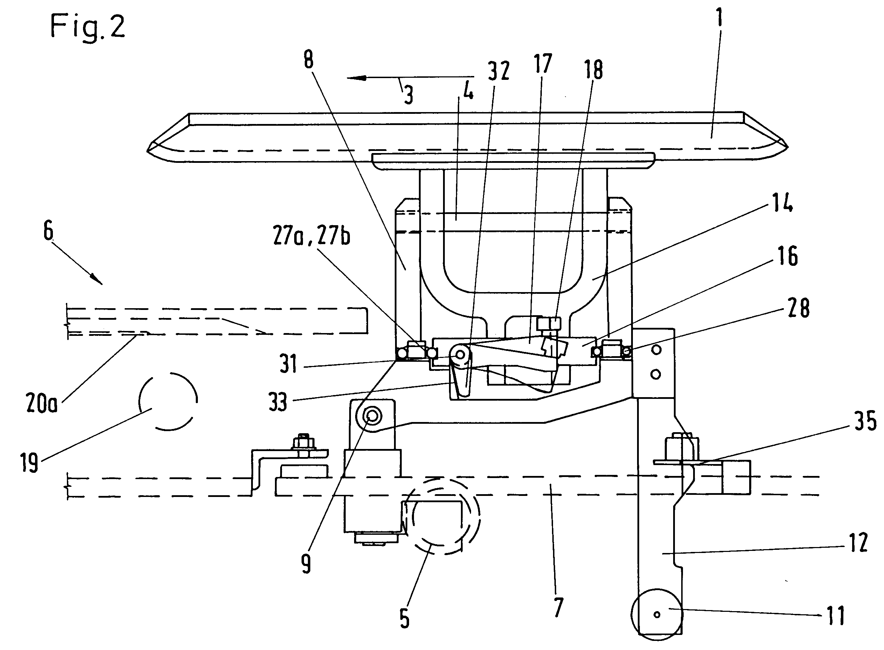

In den Fig. 2, 3 und 6 ist die Tragschale 1 in ihrer Mittelstellung 25 dargestellt.

In Fahrtrichtung 3 gesehen erfolgen Linksabwurf des Fördergutes 2 über eine ortsfeste rechte Kurvenschiene 21a und Rechtsabwurf über eine ortsfeste linke Kurvenschiene 21b.

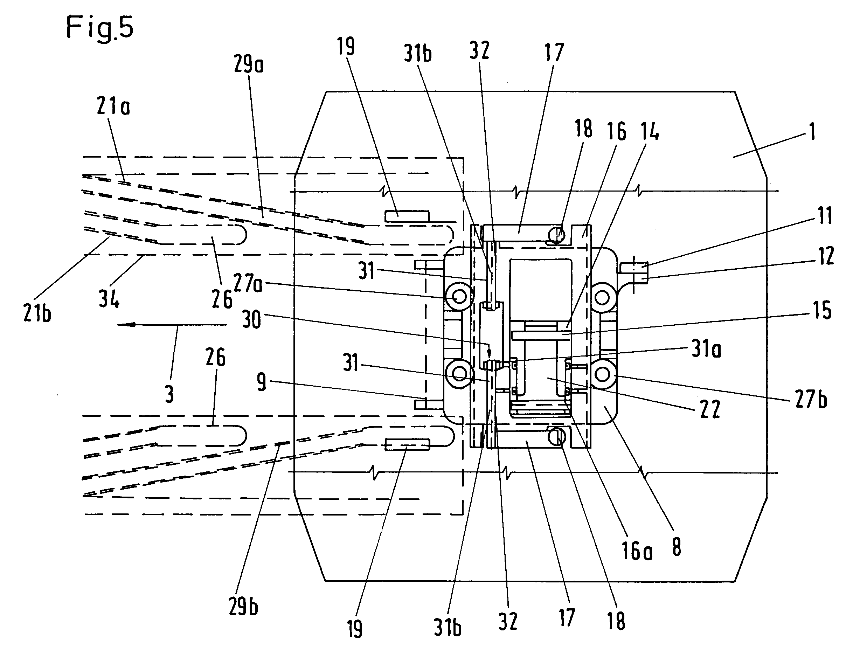

Wie aus Fig. 5 ersichtlich ist. weisen die linken und rechten Weichenstücke 20a und 20b jeweils einen anfänglich geraden und nachfolgend einen nach außen verlaufenden Kurvenabschnitt 26 auf. Letztendlich kann durch diese Anordnung eine dichte Wagenfolge geschaffen werden, da die Kurvenschienen 21a bzw. 21b wie gezeichnet ineinandergeschoben werden können, so daß der gerade Kurvenabschnitt 26 den Verlauf der benachbarten Kurvenschiene nicht stört. Ein derartiges Weichenstück 20a bzw. 20b kann daher mehrere solcher Kurvenabschnitte 26 aufweisen.

Der Schieber 16 ist ferner auf einem um eine quer zur Fahrtrichtung 3 verlaufenden Kippgelenk 9 schwenkbaren Grundkörper 8 angeordnet und zwischen paarweisen Rollenführungen 27a und/oder paarweisen Gleitführungen 27b gelagert. Wie gezeichnet können die Rollenführungen 27a aus Wälzlagerringen 28 gebildet sein.

Die Schaltkufen 17 mit den Schaltrollen 18 sind von unten in eine zumindest einseitig in einem Nuten profil 29 hinterschnittene Kurvennut 29a der Weichenstücke 20a,20b einführbar, wobei, wie aus Fig. 5 ersichtlich, die T-Form des Nutenprofils 29 noch nicht im geraden Kurvenabschnitt 26 vorhanden ist, sondern erst im Kurvenverlauf 21 beginnt.

An dem Schieber 16 sind ferner Arretiermittel 30 angeordnet, die mit dem Grundkörper 8 zusammenwirken. Hierzu sind die Schaltkufen 17 jeweils auf einer drehbaren Schaltfläche 31 befestigt, die an einem Ende 31a eine Arretiemocke 32 trägt, die bei Eingriff einer der Schaltrollen 18 in die Kurvennut 29a die Tragschale 1 gegenüber dem Grundkörper 8 arretiert. Die Schaltkufe 17 kann für hohe Schaltgeschwindigkeiten mittels eines Puffers gedämpft sein.

Im Ausführungsbeispiel gemäß Fig. 2 wirken zwei Arretiemocken 32 mit vier Anschlagflächen 33 am Grundkörper 8 zusammen. Die Schaltkufen 17 sind mittels den in den Fahrweg 34 einschiebbaren Schaltelementen 19 betätigbar, d.h. um die Schaltwellenachse 31b schwenkbar.

Die Kurvennuten 29a und 29b sind wie in Fig. 6 leicht erkennbar geformt, wobei, wie ausgeführt, das T-Profil am Kurvenverlauf 21 zum geraden Kurvenabschnitt 26 beginnt. Eine Schaltrolle 18 kann daher während des Eingriffs in den Kurvenverlauf 21 nicht aus ihrer Führung heraustreten.

Die Wirkungsweise des Sortierförderers ist wie folgt:

Zum Kippen wird das seitlich an dem Fahrweg 34 angebrachte Schaltelement 19, z.B. mittels eines Elektromagnetantriebs, eines hydraulischen oder pneumatischen Antriebs, nach innen geschoben. Dabei wird die am Schieber 16 befestigte Schaltkufe 17 durch das aus einer Auslöserolle bestehende Schaltelement 19 nach oben gedrückt, was zur Folge hat, daß die Schaltrolle 18 in das an der Bahn befestigte Weichenstück 20a eintaucht und gleichzeitig die Arretiernocke 32 über die Schaltwelle 31 aus dem Eingriff mit dem Grundkörper 8 dreht und dann eine durch die Form der T-Nut in dem Weichenstück 20a bestimmte Bewegung quer zur Fahrtrichtung 3 nach außen beschreibt.

Diese Bewegung wird von der Schaltrolle 18 über die Schaltkufe 17, die Schaltwelle 31, den Arretiernocken 32 zum Schieber 16 übertragen. Vom Schieber 16 wird dadurch über das Schiebergelenk 16a die Schwinge 22 und das Pendelgelenk 15, das Pendel 14 um die Pendelachse 14b verdreht, was zur Folge hat, daß die Tragschale 1 zur gewünschten Seite kippt.

Sofern die Schaltrolle 18 aus der T-Nut des Weichenstückes 20a (20b) gedrückt wird, dreht sich auch die Arretiernocke 32 und setzt sich außen gegen den Grundkörper 8, so daß die gekippte Stellung durch beide Arretiernocken 32 gegen den Grundkörper 8 gesichert ist.

Das Aufrichten erfolgt analog zum Kippen. Durch Anheben der Schaltkufe 17 wird die Schaltrolle 18 in Eingriff mit einer T-Nut des Weichenstückes 20a (20b) gebracht. Dabei wird auch die Arretiernocke 32 durch die Schaltwelle 31 aus dem Eingriff mit dem Grundkörper 8 gelöst.

Durch die Form der T-Nut des Weichenstückes 20a (20b) wird der Schieber 16 wieder in den Mittenzustand geschoben, und nach erfolgtem Eingriff der Arretiernocke 32 ist die Tragschale 1 im Fahrzustand sicher arretiert.

Auch die Horizontalstellung der Tragschale 1 (Fig. 1) wird durch eine Kipperarretierung 35 gesichert. Das Fördergut 2 kann jeweils nach Kippstellung der Tragschale 1 über jeweils eine Rutsche 36 nach links oder rechts abgleiten.

## Patentansprüche

1. Sortierförderer mit einer kippbaren Tragschale (1), die für die Abgabe von an einer Aufnahmestation aufgegebenem Fördergut (2) aus einer horizontalen Transportstellung durch eine Kippbewegung um eine in Fahrtrichtung (3) verlaufende Kippachse (4) mittels einer auf einem antreibbaren Wagen (5) angeordneten Kippvorrichtung schwenkbar ist, wobei über ortsfeste Kurvenschienen (6) das Schwenken der Tragschale (1) und ein Arretiervorgang einleitbar sind, sowie die Tragschale (1) an einem um die wagenfeste Kippachse (4) schwenkbaren Pendel (14) befestigt ist,
dadurch gekennzeichnet,
daß das freie Pendelende (14a) mittels eines Gelenks (15) an einem quer zur Fahrtrichtung (3) in einem Grundkörper (8) geführten Schieber (16) angelenkt ist, daß an dem Schieber (16) in Fahrtrichtung (3) links und rechts drehbar gelagerte Schaltkufen (17) mit Schaltrollen (18) vorgesehen sind, die während der Fahrt und nach Betätigung durch ortsfeste Schaltelemente (19) in ortsfeste Weichenstücke (20a,20b) eingreifen, mittels deren Kurvenverlauf (21) die Kippbewegung der Tragschale (1) steuerbar ist.

2. Sortierförderer nach Anspruch 1,
dadurch gekennzeichnet,
daß das Pendelgelenk (15) mittels einer an dem Pendelende (14a) und an dem Schieber (16) angelenkten Schwinge (22) gebildet ist.

3. Sortierförderer nach Anspruch 1,
dadurch gekennzeichnet,
daß das Gelenk (15) aus einer in einem Bereich des Pendelendes (14a) angeordneten Langlochführung (23) und einer am Schieber (16) drehgelagerten Rolle (24), die in die Langlochführung (23) eingreift, gebildet ist.

4. Sortierförderer nach einem der Ansprüche 1 bis 3,
dadurch gekennzeichnet,
daß in Fahrtrichtung (3) gesehen Linksabwurf des Fördergutes (2) über eine ortsfeste rechte Kurvenschiene (21a) und Rechtsabwurf über eine ortsfeste linke Kurvenschiene (21b) erfolgen.

5. Sortierförderer nach einem der Ansprüche 1 bis 4,
dadurch gekennzeichnet,
daß dieTragschale (1) zumindest in Mittelstellung (25) arretierbar ist.

6. Sortierförderer nach einem der Ansprüche 1 bis 5,
dadurch gekennzeichnet,
daß die linken und rechten Weichenstücke (20a,20b) jeweils einen anfänglich geraden und nachfolgend einen nach außen verlaufenden Kurvenabschnitt (26) aufweisen.

7. Sortierförderer nach einem der Ansprüche 1 bis 6,
dadurch gekennzeichnet,
aaß der Schieber (16) auf einem um ein quer zur Fahrtrichtung (3) verlaufendes Kippergelenk (9) schwenkbaren Grundkörper (8) angeordnet und zwischen paarweisen Rollen- und/oder Gleitführungen (27a,27b) gelagert ist.

8. Sortierförderer nach einem der Ansprüche 1 bis 7,
dadurch gekennzeichnet,
daß die Rollenführungen (27a) aus Wälzlagerringen (28) gebildet sind.

9. Sortierförderer nach einem der Ansprüche 1 bis 8,
dadurch gekennzeichnet,
daß die Schaltkufen (17) mit den Schaltrollen (18) in eine zumindest einseitig in einem Nutenprofil (29) hinterschnittene Kurvennut (29a) der Weichenstücke (20a,20b) einführbar sind.

10. Sortierförderer nach einem der Ansprüche 1 bis 9,
dadurch gekennzeichnet,
daß Arretiermittel (30) an dem Schieber (16) angeordnet sind, die mit dem Grundkörper (8) zusammenwirken.

11. Sortierförderer nach einem der Ansprüche 1 bis 10,
dadurch gekennzeichnet,
daß die Schaltkufen (17) jeweils auf einer drehbaren Schaltwelle (31) befestigt sind, die an einem Ende (31a) eine Arretiernocke (32) trägt, die bei Eingriff einer der Schaltrollen (18) in die Kurvennut (29a) die Tragschale (1) gegenüber dem Grundkörper (8) arretiert.

12. Sortierförderer nach einem der Ansprüche 1 bis 11,
dadurch gekennzeichnet,
daß die Schaltkufe (17) für hohe Schaltgeschwindigkeiten mittels eines Puffers gedämpft ist.

13. Sortierförderer nach einem der Ansprüche 1 bis 12,
dadurch gekennzeichnet,
daß zwei Arretiernocken (32) mit vier Anschlagflächen (33) am Grundkörper (8) zusammenwirken.

14. Sortierförderer nach einem der Ansprüche 1 bis 13,
dadurch gekennzeichnet,
daß die Schaltkufen (17) mittels der in den Fahrweg (34) einschiebbaren Schaltelemente (19) betätigbar, d.h. um die Schaltwellenachse (31b) schwenkbar sind.

## Claims

1. Sorting conveyor with a tilting carrying tray (1) which, in order to deliver material (2) being conveyed and having been loaded at a pick-up station, can be pivoted out of a horizontal transport position by a tilting movement about a tilting pin (4) extending in the direction of travel (3) by means of a tilting device disposed on a drivable truck (5), wherein the pivoting of the carrying tray (1) and a locking process can be initiated via stationary cam rails (6), and the carrying tray (1) is secured to a pendulum (14), which can pivot about the tilting pin (4) integral with the truck, characterised in that the free pendulum end (14a) is articulated by means of a joint (15) to a slide (16), which is guided transversely to the direction of travel (3) in a base body (8), that shift runners (17) having shift rollers (18) and being mounted such that they can rotate to the left and the right in the direction of travel (3) are provided on the slide (16), the rollers engaging in stationary switch parts (20a, 20b), by means of whose cam path (21) the tilting movement of the carrying tray (1) can be controlled, during travel and following actuation by stationary shift elements (19).

2. Sorting conveyor according to claim 1, characterised in that the pendulum joint (15) is formed by means of a rocker (22) articulated to the pendulum end (14a) and to the slide (16).

3. Sorting conveyor according to claim 1, characterised in that the joint (15) is formed from a slotted guide (23), which is disposed in a region of the pendulum end (14a), and a roller (24), which is rotatably mounted on the slide (16) and engages in the slotted guide (23).

4. Sorting conveyor according to one of claims 1 to 3, characterised in that, viewed in the direction of travel (3), the material (2) being conveyed is discharged to the left via a stationary right-hand cam rail (21a) and to the right via a stationary left-hand cam rail (21b).

5. Sorting conveyor according to one of claims 1 to 4, characterised in that the carrying tray (1) can be locked at least in the centre position (25).

6. Sorting conveyor according to one of claims 1 to 5, characterised in that the left-hand and the right-hand switch parts (20a, 20b) each comprise a cam section (26) extending initially in a straight line and then one extending outwards.

7. Sorting conveyor according to one of claims 1 to 6, characterised in that the slide (16) is disposed on a base body (8), which can be pivoted about a tilting joint (9) extending transversely to the direction of travel (3), and is mounted between paired roller guides and/or sliding guides (27a, 27b).

8. Sorting conveyor according to one of claims 1 to 7, characterised in that the roller guides (27a) are formed from rolling contact bearing races (28).

9. Sorting conveyor according to one of claims 1 to 8, characterised in that the shift runners (17) with the shift rollers (18) can be introduced from below into a cam groove (29a), undercut at least on one side in a groove profile (29), of the switch parts (20a, 20b).

10. Sorting conveyor according to one of claims 1 to 9, characterised in that locking means (30), which cooperate with the base body (8), are disposed on the slide (16).

11. Sorting conveyor according to one of claims 1 to 10, characterised in that the shift runners (17) are in each case secured to a rotatable shift shaft (31) which bears at one end (31a) a locking cam (32) which locks the carrying tray (1) with respect to the base body (8) when one of the shift rollers (18) engages in the cam groove (29a).

12. Sorting conveyor according to one of claims 1 to 11, characterised in that the shift runner (17) is cushioned for high shift speeds by means of a buffer.

13. Sorting conveyor according to one of claims 1 to 12, characterised in that two locking cams (32) cooperate with four stop surfaces (33) on the base body (8).

14. Sorting conveyor according to one of claims 1 to 13, characterised in that the shift runners (17) can be actuated, i.e. pivoted about the shift shaft axis (31b), by means of the shift elements (19), which can be pushed into the path of travel (34).

## Revendications

1. Transporteur de triage comportant un plateau basculant (1), qui peut pivoter, pour l'évacuation d'une matière transportée (2) reçue sur un poste de réception, à partir d'une position de transport horizontale, par un mouvement basculant, autour d'un axe de basculement (4) s'étendant dans la direction de transport (3), au moyen d'un dispositif de basculement agencé sur un chariot (5) pouvant être entraîné, le pivotement du plateau basculant (1) et un processus de blocage pouvant être mis en oeuvre par l'intermédiaire de rails courbes fixes (6), et le plateau basculant (1) étant fixé à des moyens oscillants (14) pouvant pivoter autour de l'axe de basculement (4) solidaire du chariot,
caractérisé en ce que l'extrémité libre (14a) des moyens oscillants est articulée par une articulation (15) sur un coulisseau (16) guidé transversalement à la direction de transport (3) dans un corps de base (8), en ce que, sur le coulisseau (16), dans la direction de transport (3), sont prévus des barres de commutation (17) montées de façon rotative à gauche et à droite ayant des galets de commutation (18), qui s'engagent, pendant le déplacement et après l'actionnement, par des éléments de commutation (6,19), dans des pièces fixes d'aiguillage (20a,20b), au moyen du profil incurvé (21) desquelles le mouvement de basculement du plateau basculant (1) peut être commandé.

2. Transporteur de triage selon la revendication 1,
caractérisé en ce que l'articulation (15) des moyens oscillants est formée par une coulisse (22) articulée à l'extrémité (14a) des moyens oscillants et au coulisseau (16).

3. Transporteur de triage selon la revendication 1,
caractérisé en ce que l'articulation (15) est formée à partir d'un guide (23) à trou oblong agencé dans une zone de l'extrémité (14a) des moyens oscillants et d'un galet (24) monté rotatif sur le coulisseau (16), qui s'engage dans le guide (23) à trou oblong.

4. Transporteur de triage selon une des revendications 1 à 3,
caractérisé en ce que, dans la direction de transport (3), l'éjection à gauche de la matière à transporter (2) est effectuée par l'intermédiaire d'un rail courbe droit fixe (21a) et l'éjection à droite par l'intermédiaire d'un rail courbe gauche fixe (21b).

5. Transporteur de triage selon une des revendications 1 à 4,
caractérisé en ce que le plateau basculant (1) peut être bloqué au moins dans la position centrale (25).

6. Transporteur de triage selon une des revendications 1 à 5,
caractérisé en ce que les pièces d'aiguillage (20a,20b) gauche et droite présentent, à chaque fois, un troncon tout d'abord rectiligne et, ensuite, un troncon incurvé (26) s'étendant vers l'extérieur.

7. Transporteur de triage selon une des revendications 1 à 6,
caractérisé en ce que le coulisseau (16) est agencé sur un corps de base (8) pouvant pivoter autour d'une articulation basculante (9) s'étendant transversalement à la direction de transport (3) et est monté entre des paires de guides coulissants et/ou guides à rouleaux (27a,27b).

8. Transporteur de triage selon une des revendications 1 à 7,
caractérisé en ce que les guides à rouleaux (27a) sont formés en tant que bagues de paliers à roulement (28).

9. Transporteur de triage selon une des revendications 1 à 8,
caractérisé en ce que les barres de commutation (17) ayant les galets de commutation (18) peuvent être introduites dans une rainure incurvée (29a), taillée au moins d'un côté dans un profil de rainure (29), des pièces d'aiguillage (20a,20b).

10. Transporteur de triage selon une des revendications 1 à 9,
caractérisé en ce que des moyens de blocage (30) sont agencés sur le coulisseau (16), lesquels coopèrent avec le corps de base (8).

11. Transporteur de triage selon une des revendications 1 à 10,
caractérisé en ce que les barres de commutation (17) sont fixées, à chaque fois, sur un arbre de commutation rotatif (31) qui porte, à une extrémité (31a), un ergot de blocage (32), qui, par engagement d'un des galets de commutation (18) dans la rainure incurvée (29a), bloque le plateau basculant (1) par rapport au corps de base (8).

12. Transporteur de triage selon une des revendications 1 à 11,
caractérisé en ce que la barre de commutation (17) est amortie, pour des vitesses de commutation élevées, au moyen d'un butoir.

13. Transporteur de triage selon une des revendications 1 à 12,
caractérisé en ce que deux ergots de blocage (32) coopèrent avec quatre surfaces de butée (33) sur le corps de base (8).

14. Transporteur de triage selon une des revendications 1 à 13,
caractérisé en ce que les barres de commutation (17) peuvent être actionnées au moyen des éléments de commutation (19) pouvant être insérés dans la voie de transport (34), c'est-à-dire peuvent pivoter autour de l'axe (31b) de l'arbre de commutation.
